# EUROPÄISCHE PATENTSCHRIFT

(11) **EP 2 118 498 B1**
(45) Veröffentlichungstag und Bekanntmachung des Hinweises auf die Patenterteilung: **06.09.2017**
(21) Anmeldenummer: 08715495.1
(22) Anmeldetag: 14.02.2008
(51) Int. Cl.: F04D 29/54, F01D 5/14, F04D 29/64, F01D 25/24, F01D 9/04

(54) **VERDICHTER EINER GASTURBINE**
COMPRESSOR OF A GAS TURBINE
COMPRESSEUR ET TURBINE À GAZ

(30) Priorität: 24.02.2007 DE 102007009134
(43) Veröffentlichungstag der Anmeldung: 18.11.2009
(73) Patentinhaber: MTU Aero Engines AG, 80995 München (DE)
(72) Erfinder: LIEBL, Christian, 85461 Bockhorn (DE); LOTTPREIN, Hans-Georg, 85757 Karlsfeld (DE)
(86) Internationale Anmeldenummer: PCT/DE2008/000277
(87) Internationale Veröffentlichungsnummer: WO 2008/101473

(56) Entgegenhaltungen:
- EP-A- 0 707 150
- EP-A- 1 286 022
- EP-A- 1 507 067
- US-A1- 2006 093 471

## Beschreibung

Die Erfindung betrifft einen Verdichter, insbesondere einen Hochdruckverdichter, einer Gasturbine, insbesondere eines Gasturbinenflugtriebwerks, nach dem Oberbegriff des Anspruchs 1, wie in der Druckschrift EP 1 286 022 A1 beschrieben ist.

Gasturbinenflugtriebwerke verfügen über mindestens einen Verdichter, mindestens eine Brennkammer sowie mindestens eine Turbine. So sind aus der Praxis Gasturbinenflugtriebwerke mit zwei Verdichtern, nämlich einem Niederdruckverdichter und einem Hochdruckverdichter, sowie zwei Turbinen, nämlich einer Hochdruckturbine und einer Niederdruckturbine, bekannt. Des weiteren sind Gasturbinenflugtriebwerke mit drei Verdichtern, nämlich einem Niederdruckverdichter, einem Mitteldruckverdichter und einem Hochdruckverdichter, sowie drei Turbinen, nämlich einer Hochdruckturbine, einer Mitteldruckturbine und einer Niederdruckturbine, bekannt.

Ein Verdichter eines Gasturbinenflugtriebwerks, so z.B. der Hochdruckverdichter, verfügt über mehrere Stufen, wobei jede Stufe von einem rotorseitigen Laufschaufelkranz und einem statorseitigen Leitschaufelkranz gebildet wird. Die statorseitigen Leitschaufelkränze sind aus mehreren Leitschaufelsegmenten gebildet, wobei jedes Leitschaufelsegment aus mehreren Einzelschaufeln zusammengesetzt ist.

Bei aus der Praxis bekannten Verdichtern sind sämtliche Einzelschaufeln eines Leitschaufelsegments sowohl radial außen als auch radial innen durch Verlöten dauerhaft miteinander verbunden, so dass das jeweilige Leitschaufelsegment insgesamt starr ausgebildet ist. In der Praxis hat sich gezeigt, dass sich in den Leitschaufelsegmenten solcher Leitschaufelkränze Schwingungsrisse ausbilden können.

Hiervon ausgehend liegt der vorliegenden Erfindung das Problem zu Grunde, einen neuartigen Verdichter einer Gasturbine zu schaffen.

Dieses Problem wird durch einen Verdichter einer Gasturbine im Sinne von Anspruch 1 gelöst.

Erfindungsgemäß sind innerhalb jedes Leitschaufelsegments mindestens eines Leitschaufelkranzes benachbarte Einzelschaufeln an radial außenliegenden, sich gegenüberliegenden Flächen dauerhaft miteinander verbunden, wohingegen dieselben an radial innenliegenden, sich gegenüberliegenden Flächen nicht miteinander verbunden sind. Ferner sind im Bereich mindestens eines Leitschaufelkranzes eines Verdichters eines Gasturbinenflugtriebwerks die benachbarten Einzelschaufeln jedes Leitschaufelsegments ausschließlich an sich gegenüberliegenden, radial außenliegenden Flächen dauerhaft miteinander verlötet.

Vorzugsweise können dieselben Einzelschaufeln des Leitkranzes jedoch an sich gegenüberliegenden, radial innenliegenden Flächen unverbunden sein. Hierdurch behält jedes Leitschaufelsegment eine gewisse Flexibilität, so dass die Gefahr der Ausbildung von Schwingungsrissen in den Leitschaufelsegmenten minimiert wird. Hierdurch kann die Lebensdauer der Leitschaufelsegmente verlängert werden. Dies resultiert letztendlich in Kosteneinsparungen.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

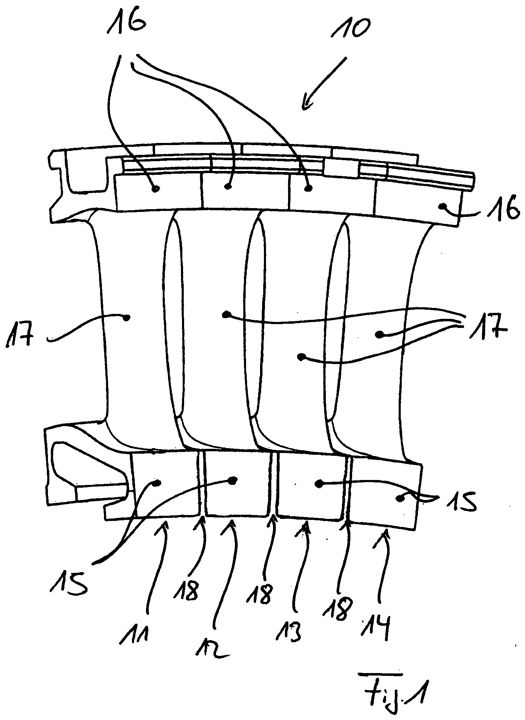

- Fig. 1: ein Leitschaufelsegment eines Leitschaufelkranzes eines erfindungsgemäßen Verdichters.

Fig. 1 zeigt ein Leitschaufelsegment 10 eines erfindungsgemäßen Verdichters einer Gasturbine, wobei das Leitschaufelsegment 10 vorzugsweise in einem Hochdruckverdichter, nämlich in hinteren Stufen desselben, eines Gasturbinenflugtriebwerks zum Einsatz kommt. Im gezeigten Ausführungsbeispiel der Fig. 1 umfasst das Leitschaufelsegment 10 insgesamt vier Einzelschaufeln 11, 12, 13 und 14, wobei jede der Einzelschaufeln 11, 12, 13 und 14 ein Innendeckband 15 sowie ein Außendeckband 16 aufweist. Zwischen dem Innendeckband und dem Außendeckband 16 jeder Einzelschaufel 11, 12, 13 und 14 erstreckt sich ein Schaufelblatt 17 derselben.

Erfindungsgemäß sind innerhalb des Leitschaufelsegments 10 die benachbarten Einzelschaufeln 11 und 12, 12 und 13 sowie 13 und 14 an radial außenliegenden, sich gegenüberliegenden Flächen dauerhaft miteinander verbunden, wohingegen dieselben an radial innenliegenden, sich gegenüberliegenden Flächen nicht miteinander verbunden sind. Die benachbarten Einzelschaufeln 11 und 12, 12 und 13 sowie 13 und 14 sind demnach im Bereich des Außendeckbands 16 an sich gegenüberliegenden Flächen dauerhaft miteinander verbunden, im Bereich des Innendeckbands 15 sind dieselben hingegen an den sich gegenüberliegenden Flächen unverbunden. Das Verbinden der Einzelschaufeln 11, 12, 13 und 14 im Bereich des Außendeckbands 16 derselben erfolgt vorzugsweise durch Verlöten.

Wie Fig. 1 entnommen werden kann, sind im Bereich des Innendeckbands 15 zwischen sich gegenüberliegenden Flächen der benachbarten Einzelschaufeln 11 und 12, 12 und 13 sowie 13 und 14 Spalte 18 ausgebildet. Die Spalte 18 verfügen vorzugsweise über eine Breite zwischen 0,02 mm und 0,05 mm.

Bedingt dadurch, dass innerhalb des Leitschaufelsegments 10 die Einzelschaufeln 11, 12, 13 und 14 im Bereich des Innendeckbands 15 unverbunden sind, behält das Leitschaufelsegment 10 eine gewisse Flexibilität, so dass die Gefahr der Ausbildung von Schwingungsrissen innerhalb des Leitschaufelsegments 10 minimiert ist.

## Patentansprüche

1. Verdichter, insbesondere Hochdruckverdichter, einer Gasturbine, insbesondere eines Gasturbinenflugtriebwerks, mit mindestens einem rotorseitigen Laufschaufelkranz und mit mindestens einem statorseitigen Leitschaufelkranz, wobei der oder
jeder Leitschaufelkranz aus mehreren Leitschaufelsegmenten gebildet ist, und wobei jedes Leitschaufelsegment aus mehreren Einzelschaufeln gebildet ist, wobei innerhalb jedes Leitschaufelsegments (10) mindestens eines Leitschaufelkranzes benachbarte Einzelschaufeln (11, 12; 12, 13; 13, 14) an radial außenliegenden, sich gegenüberliegenden Flächen dauerhaft miteinander verbunden sind, wohingegen dieselben an radial innenliegenden, sich gegenüberliegenden Flächen nicht miteinander verbunden sind, **dadurch gekennzeichnet,**
**dass** die benachbarten Einzelschaufeln (11, 12; 12, 13; 13, 14) im Bereich eines Außendeckbands (16) an sich gegenüberliegenden Flächen dauerhaft miteinander verlötet sind.

2. Verdichter nach Anspruch 1,
**dadurch gekennzeichnet,**
**dass** die benachbarten Einzelschaufeln (11, 12; 12, 13; 13, 14) im Bereich eines Innendeckbands (15) an sich gegenüberliegenden Flächen unverbunden sind.

3. Verdichter nach Anspruch 2,
**dadurch gekennzeichnet,**
**dass** im Bereich des Innendeckbands (15) zwischen den sich gegenüberliegenden Flächen der benachbarten Einzelschaufeln (11, 12; 12, 13; 13, 14) Spalte (18) ausgebildet sind.

4. Verdichter nach Anspruch 3,
**dadurch gekennzeichnet,**
**dass** die Spalte (18) eine Breite zwischen 0,02 mm und 0,05 mm aufweisen.

## Claims

1. A compressor, in particular a high-pressure compressor, of a gas turbine, in particular of a gas turbine aircraft engine, having at least one rotor-side moving blade ring and at least one stator-side guide blade ring, wherein the or each guide blade ring is formed from a plurality of guide blade segments, and wherein each guide blade segment is formed from a plurality of individual blades, wherein inside each guide blade segment (10) of at least one guide blade ring adjacent individual blades (11, 12; 12, 13; 13, 14) on radially outer, opposing surfaces are permanently connected to one another, whereas said individual blades on radially inner, opposing surfaces are not connected to one another,
**characterized in that**
the adjacent individual blades (11, 12; 12, 13; 13, 14) in the region of an outer shroud band (16) are permanently soldered to one another on opposing surfaces.

2. The compressor according to claim 1,
**characterized in that**
the adjacent individual blades (11, 12; 12, 13; 13, 14) in the region of an inner shroud band (15) are not connected to one another on opposing surfaces.

3. The compressor according to claim 2,
**characterized in that**
in the region of the inner shroud band (15) gaps (18) are formed between the opposing surfaces of the adjacent individual blades (11, 12; 12, 13; 13, 14).

4. The compressor according to claim 3,
**characterized in that**
the gaps (18) have a width between 0.02 mm and 0.05 mm.

## Revendications

1. Compresseur, en particulier compresseur haute pression, d'une turbine à gaz, en particulier d'un groupe motopropulseur à turbine à gaz, comprenant au moins une couronne d'aubes mobiles côté rotor et au moins une couronne d'aubes directrices côté stator, dans lequel la ou chaque couronne d'aubes directrices est formée de plusieurs segments d'aubes directrices et dans lequel chaque segment d'aubes directrices est formé de plusieurs aubes individuelles, dans lequel des aubes individuelles adjacentes (11, 12; 12, 13; 13, 14) à l'intérieur de chaque segment d'aubes directrices (10) d'au moins une couronne d'aubes directrices sont reliées l'une à l'autre de manière permanente sur des surfaces en regard l'une de l'autre tournées radialement vers l'extérieur, tandis que ces mêmes surfaces en regard l'une de l'autre tournées radialement vers l'intérieur ne sont pas liées l'une à l'autre, **caractérisé en ce que** :
les aubes individuelles adjacentes (11, 12; 12, 13; 13, 14) sont brasées l'une à l'autre de manière permanente sur des surfaces en regard l'une de l'autre dans la zone d'un anneau de renfort externe (16).

2. Compresseur selon la revendication 1,
**caractérisé en ce que** :
les aubes individuelles adjacentes (11, 12; 12, 13; 13, 14) ne sont pas reliées à des surfaces en regard l'une de l'autre dans la zone d'un anneau de renfort interne (15).

3. Compresseur selon la revendication 2,
**caractérisé en ce que** :
des entrefers (18) sont formés dans la zone de l'anneau de renfort interne (15) entre les surfaces en regard l'une de l'autre des aubes individuelles adjacentes (11, 12; 12, 13; 13,14).

4. Compresseur selon la revendication 3,
**caractérisé en ce que** :
les entrefers (18) présentent une largeur entre 0,02 mm et 0,05 mm.
